# EUROPÄISCHE PATENTANMELDUNG

(11) **EP 1 153 862 A1**
(43) Veröffentlichungstag der Anmeldung: **14.11.2001**
(21) Anmeldenummer: 01109386.1
(22) Anmeldetag: 19.04.2001
(51) Int. Cl.: B65G 53/66, B65G 53/60, B65G 53/06

(54) **Vorrichtung und Verfahren zur Feststoffdosierung und pneumatischen Förderung**

(30) Priorität: 11.05.2000 DE 10022998
(71) Anmelder: Wacker-Chemie GmbH, 81737 München (DE)
(72) Erfinder: Huber, Helmut, 84547 Emmerting (DE); Wöhrl, Helmut, 84503 Altötting (DE); Schuster, Johann, Dr., 84547 Emmerting (DE)
(74) Vertreter: Potten, Holger

(57) **Zusammenfassung**

Die Erfindung betrifft ein pneumatisches Fördersystem, umfassend eine Vorrichtung zur gravimetrischen Feststoffdosierung, durch welche einer Förderleitung ein leicht fluidisierbares Fördergut zugeführt wird, und einen Mischer, in den das fluidisierbare Fördergut durch die Förderleitung gefördert wird,
dadurch gekennzeichnet, daß sich eine Entgasungsschnecke zwischen der gravimetrischen Feststoffdosierung und dem Mischer befindet.

## Beschreibung

Die Erfindung betrifft eine Vorrichtung und ein Verfahren zur Feststoffdosierung und pneumatischen Förderung von fluidisierbaren Schüttgütern.

Es ist bekannt, für die Langstreckenförderung von leicht fluidisierbaren Schüttgütern wie z.B. hochdisperser Kieselsäure, eine pneumatische Rohrförderung zu verwenden. Dabei ist es üblich, vor die pneumatische Förderung einen Druckbehälter vorzuschalten. Es ist ferner bekannt, die Feststoffdosierung zur Rohrförderung mittels einer Druckluftmembranpumpe vorzunehmen. Bei der Feststoffdosierung mittels einer Druckluftmembranpumpe kann es passieren, daß nachteiligerweise ein Überdruck von einigen mbar aufgebaut wird, der zu Problemen am anderen Ende des Fördersystems führt, wenn das Produkt dort direkt weiterverarbeitet wird und es bei dieser Weiterverarbeitung auf eine exakte Dosierung des Fördergutes ankommt. Der genannte Effekt führt z.B. bei der Weiterverarbeitung in einem Mischer zu einer inhomogenen Mischverteilung.

Aus dem gleichen Grund war es bisher mit geschlossenen Mischern nicht möglich, die Feststoffdosierung zu einem Mischer mittels Druckluftmembranpumpe durchzuführen. Durch den Überdruck kommt es in geschlossenen Mischern zum Durchschießen des Feststoffes und dies kann zu inhomogenen Mischungsverteilungen führen.

Aufgabe der Erfindung ist es, ein pneumatisches Fördersystem so zu modifizieren, daß das genannte Problem nicht mehr auftritt.

Die Aufgabe wird gelöst durch ein pneumatisches Fördersystem umfassend eine Vorrichtung zur gravimetrischen Feststoffdosierung, durch welche einer Förderleitung ein leicht fluidisierbares Fördergut zugeführt wird, und einen geschlossenen Mischer, in den das fluidisierbare Fördergut durch die Förderleitung gefördert wird, dadurch gekennzeichnet, daß sich eine Entgasungsschnecke zwischen der gravimetrischen Feststoffdosierung und dem Mischer befindet.

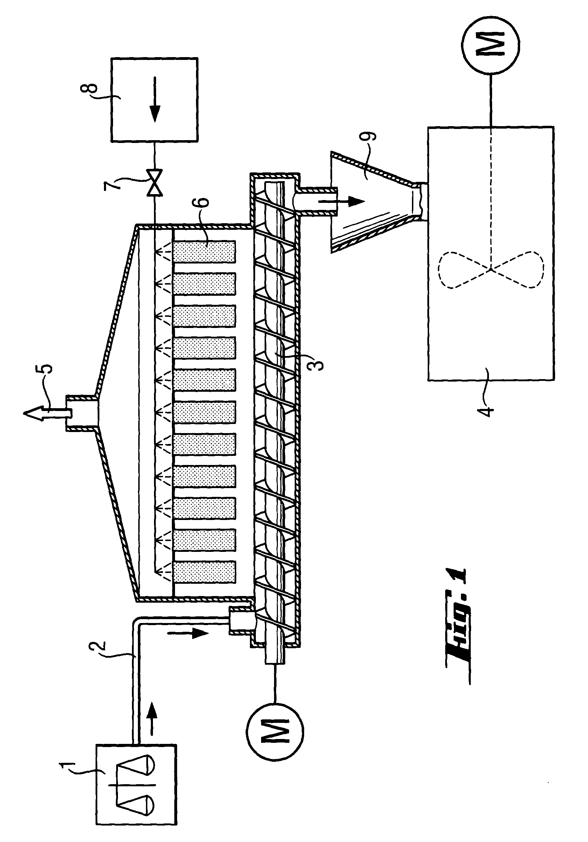

Im folgenden wird anhand Fig. 1 das erfindungsgemäße Fördersystem beschrieben.

Das pneumatische Fördersystem umfaßt ein gravimetrisches Wiegesystem (1), eine Förderleitung (2), eine Entgasungsschnecke (3) und einen Mischer (4), wobei die Entgasungsschnecke (3) über ein Abluftsystem (5) verfügt.

Entgasungsschnecke (3) und Mischer (4) werden vorzugsweise mittels je eines Motors (M) angetrieben.

Vorzugsweise befindet sich zwischen Entgasungsschnecke (3) und Mischer (4) ein Einlauftrichter (9).

Die Erfindung betrifft auch eine Entgasungsschnecke (3), die dadurch gekennzeichnet ist, daß sie über ein Abluftsystem (5) verfügt.

Vorzugsweise ist das Abluftsystem (5) der Entgasungsschnecke (3) mit einem Totalfilter (6) versehen.

Vorzugsweise kann der Totalfilter (6) mittels eines Ventils (7) und eines Druckkessels (8) gereinigt werden.

Die erfindungsgemäße Vorrichtung eignet sich insbesondere für Schüttgüter in Mengen von vorzugsweise 500 g/h bis 200 kg/h.

Auch Feststoffe, deren Schüttdichte sehr stark druckabhängig ist, lassen sich exakt dosieren und fördern.

Die Vorrichtung läßt sich beispielsweise einsetzen zum Dosieren und Fördern von feinteiligen Füllstoffen, beispielsweise zur Herstellung von Kunststoffmischungen, Antischaummitteln und dergleichen mehr. Die Vorrichtung eignet sich besonders für das Dosieren und Fördern feinteiliger fluidisierbarer Schüttgüter in kontinuierlich arbeitende dynamische Mischer.

Beispiele für nach der erfindungsgemäßen Vorrichtung dosier- und transportierbare Füllstoffe sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver; verstärkende Füllstoffe, also Füllstoffe mit einer BET-Oberfläche von mehr als 50 m²/g, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest sowie Kunststoffasern. Die genannten Füllstoffe können hydrophobiert sein, beispielsweise durch die Behandlung mit Organosilanen bzw. -siloxanen oder durch Verätherung von Hydroxylgruppen zu Alkoxygruppen.

Besonders geeignet ist die erfindungsgemäße Vorrichtung zur Dosierung von hochdisperser Kieselsäure.

Die Erfindung betrifft ferner ein Verfahren zur Feststoffdosierung und pneumatischen Förderung eines fluidisierbaren Schüttgutes.

Dieses Verfahren läuft wie folgt ab: Über ein gravimetrisches Wiegesystem (1) wird das Schüttgut durch eine Förderleitung (2) in eine Entgasungsschnecke (3) eingebracht. In der Entgasungsschnecke (3) wird das Entgasungs- bzw. Beruhigungsverhalten des Schüttguts eingestellt. Dies kann beispielsweise über die Variation der Drehzahl der Entgasungsschnecke (3) und auch über die Variation der Länge der Entgasungsschnecke (3) erfolgen. Die Entgasungsschnecke (3) verfügt über ein Abluftsystem (5), durch das überflüssiges Gas ggf. geregelt aus dem System ausgebracht werden kann. Dieses Gas wird vorzugsweise über Totalfilter (6) aus der Entgasungsschnecke (3) ausgeschleust. Somit wird das bereits gewogene Produktverhältnis nicht mehr verändert. Wenn das Produkt die Entgasungsschnecke (3) durchlaufen hat, gelangt es vorzugsweise über den Einlauftrichter (9) in den Mischer (4). Die Schnecke wird vorzugsweise für einen Ansatz mit einer konstanten Drehzahl gefahren.

## Patentansprüche

1. Pneumatisches Fördersystem, umfassend eine Vorrichtung zur gravimetrischen Feststoffdosierung, durch welche einer Förderleitung ein leicht fluidisierbares Fördergut zugeführt wird, und einen Mischer, in den das fluidisierbare Fördergut durch die Förderleitung gefördert wird, **dadurch gekennzeichnet, daß** sich eine Entgasungsschnecke zwischen der gravimetrischen Feststoffdosierung und dem Mischer befindet

2. Pneumatisches Fördersystem, das ein gravimetrisches Wiegesystem (1), eine Förderleitung (2), eine Entgasungsschnecke (3) und einen Mischer (4) umfaßt, **dadurch gekennzeichnet, daß** die Schnecke (3) über ein Abluftsystem (5) verfügt.

3. Pneumatisches Fördersystem nach Anspruch 2, **dadurch gekennzeichnet, daß** sich zwischen Entgasungsschnecke (3) und Mischer (4) ein Einlauftrichter (9) befindet.

4. Entgasungsschnecke **dadurch gekennzeichnet, daß** sie über ein Abluftsystem (5) verfügt.

5. Entgasungsschnecke nach Anspruch 4, **dadurch gekennzeichnet, daß** das Abluftsystem (5) mit einem Totalfilter (6) versehen ist.

6. Entgasungsschnecke nach Anspruch 5, **dadurch gekennzeichnet, daß** der Totalfilter mittels eines Ventils (7) und eines Druckkessels (8) gereinigt werden kann.

7. Verfahren zur pneumatischen Förderung eines leicht fluidisierbaren Fördergutes, bei dem das Fördergut über ein gravimetrisches Wiegesystem in eine Förderleitung eingebracht wird und durch diese zu einer Entgasungsschnecke (3) transportiert wird, **dadurch gekennzeichnet, daß** in der Entgasungsschnecke (3) das Entgasungs- bzw. Beruhigungsverhalten des Fördergutes eingestellt wird und somit das bereits gewogene Produktverhältnis nicht mehr verändert wird und das Fördergut, nachdem es die Entgasungsschnecke (3) durchlaufen hat, in einen Mischer (4) gelangt.

8. Verfahren nach Anspruch 7, **dadurch gekennzeichnet, daß** das Entgasungs- bzw. Beruhigungsverhalten des Fördergutes über die Variation der Drehzahl der Entgasungsschnecke (3) oder über die Variation der Länge der Entgasungsschnecke (3) eingestellt wird.

9. Verfahren nach Anspruch 7 oder 8, **dadurch gekennzeichnet, daß** Gas geregelt über Totalfilter (6) aus dem System ausgebracht wird.

10. Verfahren nach einem der Ansprüche 7 bis 9, **dadurch gekennzeichnet, daß** die Entgasungsschnecke (3) für einen Ansatz mit einer konstanten Drehzahl gefahren wird.
